# FASCICULE DE BREVET EUROPEEN

(11) **EP 0 716 252 B1**
(45) Date de publication et mention de la délivrance du brevet: **27.01.1999**
(21) Numéro de dépôt: 95402565.6
(22) Date de dépôt: 15.11.1995
(51) Int. Cl.: F16H 63/30, F16H 3/38

(54) **Dispositif perfectionné de commande d'une boîte de vitesses**
Steuereinrichutng für ein Schaltgetriebe
Control device for a gearbox

(30) Priorité: 07.12.1994 FR 9414725
(43) Date de publication de la demande: 12.06.1996
(73) Titulaire: AUTOMOBILES PEUGEOT, 75116 Paris (FR); AUTOMOBILES CITROEN, 92200 Neuilly-sur-Seine (FR)
(72) Inventeur: Ploe, Pierre, F-25200 Montbeliard (FR); Clavelin, André, F-25550 Raynans (FR)
(74) Mandataire: Polus, Camille

(56) Documents cités:
- FR-A- 2 299 562
- GB-A- 2 127 114
- US-A- 4 294 338
- US-A- 4 337 675

## Description

La présente invention concerne un dispositif perfectionné de commande d'une boîte de vitesses.

FR-A-2 686 669 décrit un dispositif de commande d'une boîte de vitesses du type comportant des moyens de freinage des pignons de rapport de marche arrière par coopération des organes d'engagement de ce rapport avec des éléments d'actionnement d'un synchroniseur associé à l'un des rapports de marche avant de la boîte de vitesses, ces moyens de freinage comprenant un basculeur pivotant de commande de l'engagement du rapport de marche arrière, muni d'un bras comportant un guide dans lequel est reçu un doigt de commande lié en translation à un axe coulissant de commande du synchroniseur, le guide comportant un premier tronçon sensiblement rectiligne qui, en position non engagée du rapport de marche arrière, s'étend parallèlement à l'axe de commande, et un second tronçon dont la direction générale est sensiblement perpendiculaire à celle du premier tronçon et qui comporte une première rampe inclinée par rapport à la direction générale du second tronçon de manière à provoquer un déplacement de l'axe de commande dans un premier sens correspondant à l'actionnement du synchroniseur lorsque le basculeur accomplit une première portion de sa course d'engagement du rapport de marche arrière, et une seconde rampe inclinée en sens inverse par rapport à la première rampe de manière à permettre un déplacement de l'axe de commande dans l'autre sens correspondant au dégagement du synchroniseur lorsque le basculeur accomplit une seconde portion de sa course d'engagement.

Le guide décrit dans ce document provoque l'actionnement du synchroniseur aussi bien lors de l'engagement du rapport de marche arrière que lors du désengagement de ce rapport. Or, l'actionnement du synchroniseur est inutile dans ce deuxième cas et provoque une usure supplémentaire des pièces actionnées.

GB-A-2 127 114 décrit un dispositif de commande de boîte de vitesses à synchroniseur comportant une came destinée à éviter l'actionnement du synchroniseur lors du désengagement du rapport de marche arrière.

L'invention a pour but d'éviter l'actionnement du synchroniseur lors du désengagement du rapport de marche arrière dans un dispositif de commande tel que défini plus haut.

A cet effet, l'invention a pour objet un dispositif de commande d'une boîte de vitesses, du type précité, caractérisé en ce que les deux rampes inclinées du guide sont délimitées par une came escamotable lorsque le basculeur accomplit une course de désengagement du rapport de marche arrière, et en ce que la came est portée par un support monté basculant sur le bras du basculeur, sollicité élastiquement en position active de la came contre une butée portée par le bras.

Suivant d'autres caractéristiques de l'invention:
- le bord du guide opposé à la seconde rampe de la came délimite une contre-rampe, sensiblement parallèle à cette seconde rampe, destinée à provoquer un déplacement de l'axe de commande dans le sens de dégagement du synchroniseur ;
- le bras du basculeur et le support de came forment des plaques juxtaposées face contre face, le guide étant délimité par des lumières superposées ménagées dans le bras du basculeur et le support de came ;
- la contre-rampe comporte des parties fixe et mobile délimitées respectivement par les lumières du bras et du support de came ;
- les contours des lumières ne diffèrent sensiblement que par la présence de la came pour l'une et l'absence de cette came pour l'autre, et coïncident lorsque la came est en position active ;
- la butée de position active de la came est délimitée par un pion cylindrique d'axe parallèle à l'axe de basculement du support de came, muni d'une tête de guidage de ce support ;
- l'axe de pivotement du support de came est sensiblement concourant avec une normale à la première rampe ;
- le bras comporte une extrémité de liaison avec le reste du basculeur, qui est rapprochée de l'axe de pivotement du basculeur, et une extrémité libre, opposée à la précédente, qui est éloignée de l'axe de pivotement du basculeur, l'axe de basculement du support de came est porté par l'extrémité de liaison du bras, et la came est disposée à l'extrémité libre du bras ;
- la butée de position active de la came est portée par l'extrémité libre du bras du basculeur ;
- l'axe de pivotement du basculeur et l'axe de commande du synchroniseur sont sensiblement concourants;
- au point mort, le doigt de commande coopère avec jeu avec la première rampe.

L'invention sera mieux comprise à la lecture de la description qui va suivre donnée uniquement à titre d'exemple, pour la compréhension de laquelle on se référera aux dessins annexés dans lesquels :
- la figure 1 est une vue en plan d'un dispositif de commande selon l'invention ;
- les figures 2 et 3 sont des vues de détail de la figure 1, à échelle agrandie, représentant le basculeur et le support de came, ce dernier étant représenté dans deux positions différentes ;
- la figure 4 est une vue en coupe suivant la ligne 4-4 de la figure 3 ;
- les figures 5 à 12 sont des vues similaires à la figure 1, dans lesquelles le basculeur est représenté dans différentes positions d'utilisation.

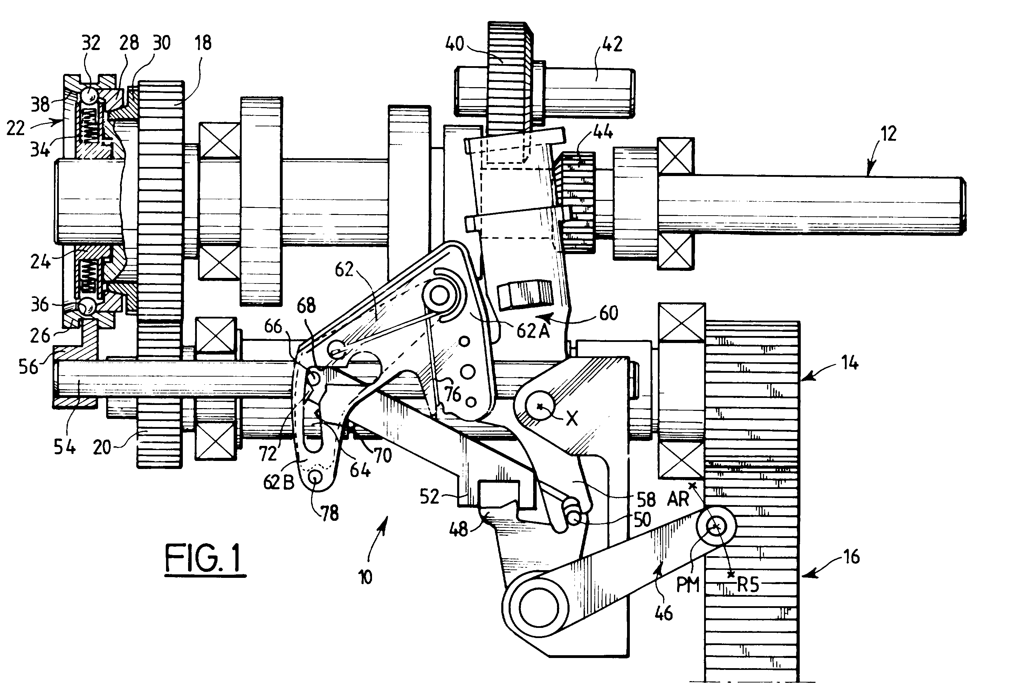

On a représenté sur la figure 1 un dispositif de commande d'une boîte de vitesses de véhicule selon l'invention, désigné par la référence générale 10. Sur cette figure, le dispositif 10 est au point mort.

De façon classique, le dispositif de commande 10 comprend un boîtier, non représenté sur les figures, dans lequel sont montés deux arbres parallèles, l'un primaire 12 et l'autre secondaire 14, destinés à être couplés entre eux par des engrenages à dentures extérieures. L'arbre secondaire 14 est constamment relié à des roues motrices du véhicule par des moyens 16 de type connu.

L'arbre primaire 12 comporte un pignon fou primaire 18 de marche avant, par exemple de cinquième rapport de marche avant, engrenant constamment avec un pignon secondaire 20 de marche avant porté par l'arbre secondaire 14 et solidaire en rotation de cet arbre.

Le pignon primaire 18 de marche avant est destiné à être couplé à l'arbre primaire 12 au moyen d'un synchroniseur 22 porté par cet arbre.

Le synchroniseur 22 comporte, de façon classique, un moyeu 24 solidaire de l'arbre primaire, un manchon de commande 26 et un cône ou anneau de friction 28, montés coulissants axialement sur le moyeu 24.

Le cône 28 du synchroniseur est destiné à coopérer avec un cône de friction complémentaire 30 porté par le pignon primaire 18 de marche avant.

Le synchroniseur 22 comporte également des billes de verrouillage 32 portées par le moyeu 24 et sollicitées élastiquement par des ressorts 34 contre des surfaces de verrouillage 36,38 du manchon 26 de conicités opposées.

Le manchon de commande 26 est donc déplaçable, à l'aide de moyens qui seront décrits ultérieurement, entre une position de libération du pignon primaire 18 de marche avant, telle que représentée à la figure 1, dans laquelle les billes 32 coopèrent avec une première surface de verrouillage 36 la plus proche de ce pignon 18 (à droite en considérant la figure 1), et une position de couplage du pignon primaire 18 avec l'arbre primaire 12, dans laquelle les billes 32 coopèrent avec la seconde surface de verrouillage 38 la plus éloignée de ce pignon 18 (à gauche en considérant la figure 1).

On a également représenté sur la figure 1 un pignon baladeur 40 de marche arrière porté par un arbre de renvoi 42 parallèle aux arbres primaire et secondaire, destiné à être déplacé, à l'aide de moyens qui seront décrits ultérieurement, entre une position de libération, telle que représentée à la figure 1, et une position de couplage avec un pignon primaire de marche arrière 44 solidaire en rotation de l'arbre primaire 12.

Les moyens de déplacement du manchon de commande 26 et du pignon baladeur 40 de marche arrière comportent un levier de commande 46 monté pivotant dans le boîtier, déplaçable, de part et d'autre d'une position de point mort PM représentée à la figure 1, vers une position de marche arrière AR ou vers une position de cinquième rapport de marche avant R5. Ce levier 46 est relié de façon classique à des moyens de changement de rapports de vitesses accessibles depuis l'habitacle du véhicule.

Le levier 46 porte deux doigts 48,50 de commande du synchroniseur 22 et du pignon baladeur 40 de marche arrière, respectivement.

Le premier doigt de commande 48 est destiné à coopérer, lors de l'engagement du cinquième rapport de marche avant, avec une crosse ou noix 52 de cinquième solidaire en translation d'un axe de commande 54 parallèle aux arbres primaire et secondaire, monté coulissant axialement dans le boîtier. Cet axe de commande 54 porte un fourchette 56 coopérant de façon connue en soi avec le manchon de commande 26 afin de le déplacer entre ses positions de verrouillage définies plus haut.

Le second doigt de commande 50 est destiné à coopérer, lors de l'engagement de la marche arrière, avec une crosse ou noix 58 formant une extrémité d'un basculeur 60 de commande de marche arrière monté pivotant dans le boîtier autour d'un axe géométrique fixe X qui est perpendiculaire à l'axe de commande 54 et aux axes des arbres primaire et secondaire.

L'autre extrémité du basculeur 60 coopère de façon connue en soi avec le pignon baladeur 40 de marche arrière afin de le déplacer entre ses positions définies plus haut.

Le dispositif de commande 10 comporte de plus des moyens de freinage des pignons de la boîte de vitesses préalablement à l'engagement du rapport de marche arrière par coopération des organes d'engagement de ce rapport avec des éléments d'actionnement du synchroniseur 22.

Ces moyens de freinage comprennent une portion ou bras 62 du basculeur 60 s'étendant en regard de l'axe 54 de commande en translation axiale du manchon 26 du synchroniseur.

Le bras 62 comporte une extrémité de liaison 62A rapprochée de l'axe X de pivotement du basculeur et fixée, de façon connue en soi, sur le reste de ce basculeur, et une extrémité libre 62B opposée à la précédente et éloignée de l'axe de pivotement X. En variante, le bras 62 peut être venu de matière avec le reste du basculeur 60.

Un doigt radial 66, solidaire en translation de l'axe de commande 54, est reçu dans un guide 64 en forme générale de L, porté par le bras 62.

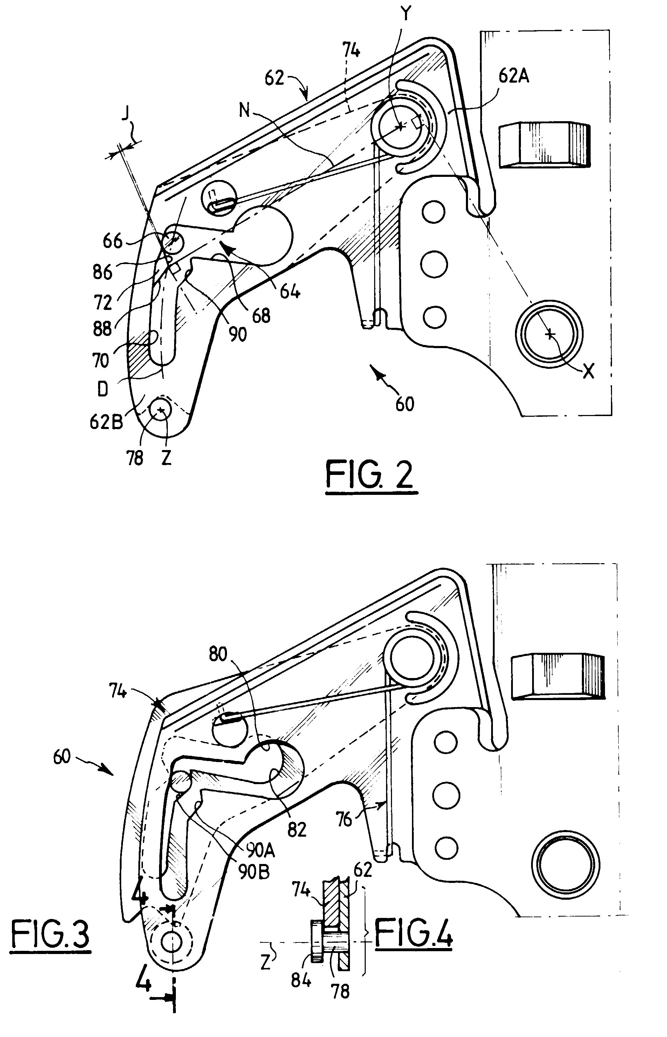

En se référant à la figure 1 et aux figures 2 et 3 sur lesquelles le basculeur 60 est représenté plus en détail, on voit que le guide 64 comporte un premier tronçon rectiligne 68 qui, dans la position illustrée à la figure 1, s'étend parallèlement et sensiblement en regard de l'axe de commande 54 en permettant le libre coulissement du doigt 66 et de cet axe 54 lors de l'engagement et du dégagement du cinquième rapport de marche avant.

Le guide 64 comporte de plus un second tronçon 70, légèrement curviligne, dont la direction générale D est sensiblement perpendiculaire à celle du premier tronçon 68. La courbure de ce second tronçon 70 est sensiblement centrée sur l'axe X de pivotement du basculeur.

Le second tronçon 70 du guide comporte une came 72 escamotable portée par un support 74 monté basculant sur le bras 62, autour d'un axe Y parallèle à l'axe X de pivotement du basculeur 60. Un ressort 76, en forme générale d'épingle, rappelle élastiquement le support 74 en position active de la came contre une butée 78 portée par le bras 62.

Le bras 62 du basculeur et le support 74 de came forment des plaques juxtaposées face contre face.

Le guide 64 est délimité par des lumières superposées 80,82, en forme générale de L, ménagées dans le bras 62 et le support 74. Les contours de ces lumières 80,82 ne diffèrent sensiblement que par la présence de la came 72 pour l'une et l'absence de cette came pour l'autre. Ces contours coïncident lorsque la came 72 est en position active en faisant saillie au droit de la lumière 80 ménagée dans le bras 62, comme cela est représenté à la figure 2.

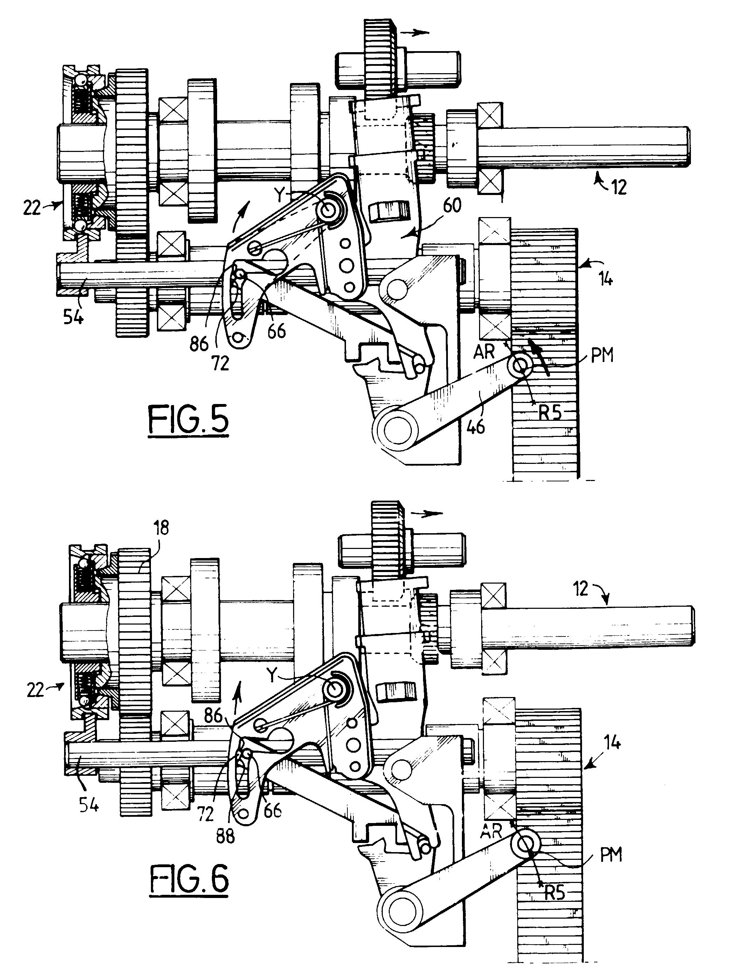

En se référant à la figure 4, on voit que la butée 78 de position active de la came 72 est délimitée, de préférence, par un pion cylindrique d'axe Z parallèle aux axes X et Y, muni d'une tête 84 de guidage du support 74 de came.

La came 72 est délimitée par deux rampes 86,88 inclinées par rapport à la direction générale du second tronçon 70 et en sens inverse l'une par rapport à l'autre.

Comme on le décrira plus en détail par la suite, la première rampe 86 est destinée à provoquer un déplacement de l'axe de commande 54 dans un premier sens (vers la droite en considérant la figure 1) correspondant à l'actionnement du synchroniseur 22 lorsque le basculeur 60 accomplit une première portion de sa course d'engagement du rapport de marche arrière. Afin d'éviter un escamotage de la came 72 lors de cette première portion de course d'engagement, l'axe Y de basculement du support 74 de came est sensiblement concourant à une normale N à la première rampe 86.

La seconde rampe 88 est destinée à permettre un déplacement de l'axe de commande 54 dans l'autre sens (vers la gauche en considérant la figure 1) correspondant au dégagement du synchroniseur 22 lorsque le basculeur 60 accomplit une seconde portion de sa course d'engagement du rapport de marche arrière.

Le bord du guide 64, opposé à la seconde rampe 88 délimite une contre-rampe 90 sensiblement parallèle à cette seconde rampe 88, destinée à provoquer un déplacement de l'axe de commande 54 dans le sens de dégagement du synchroniseur 22.

La contre-rampe 90 comporte des parties fixe 90A et mobile 90B délimitées respectivement par les lumières 80,82 du bras 62 et du support 74 de came.

On décrira ci-dessous le fonctionnement du dispositif de commande selon l'invention en prenant comme position initiale du levier de commande 46 la position de point mort PM représentée à la figure 1.

Au point mort, le doigt de commande 66 est disposé à la jonction des deux tronçons 68,70 du guide.

L'arbre secondaire 14, couplé aux roues du véhicule, est à l'arrêt.

Lorsque le levier de commande 46 est déplacé vers sa position de marche arrière, le basculeur 60 accomplit tout d'abord une première portion de course au cours de laquelle la première rampe 86 de la came 72 sollicite axialement le doigt de commande 66 et l'axe de commande 54 dans le sens d'actionnement du synchroniseur 22, comme cela est représenté sur la figure 5. La came 72 ne s'escamote pas car la force d'appui de cette dernière sur le doigt de commande 66 est dirigée sensiblement vers l'axe Y de basculement du support de came.

Lorsque le doigt de commande 66 atteint le sommet de la came 72 séparant les deux rampes 86,88, comme cela est représenté sur la figure 6, l'arbre primaire 12 est lié en rotation avec l'arbre secondaire 14 sous l'effet des forces de friction entre le synchroniseur 22 et le pignon primaire 18 de marche avant. A ce moment, les arbres primaire 12 et secondaire 14 sont arrêtés.

Puis le basculeur 60 accomplit une seconde portion de course au cours de laquelle le doigt de commande 66 et la came 72 coopèrent de la façon suivante.

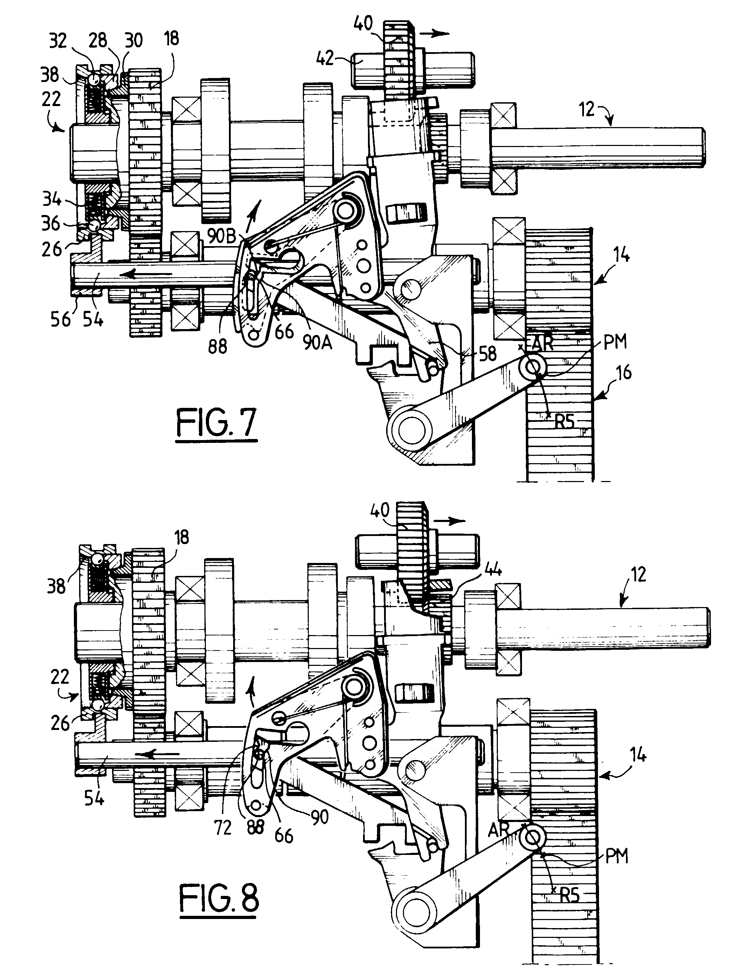

Si lors de la première portion de la course du basculeur 60, les billes 32 du synchroniseur 22 ont été maintenues en contact avec la première surface 36 de verrouillage, celles-ci exercent, sous l'effet des ressorts 34, une force élastique de rappel de l'axe de commande 54 dans son sens de dégagement du synchroniseur 22. Le doigt de commande 66 est alors en appui contre la seconde rampe 88 de la came 72 de manière à escamoter cette came, comme cela est représenté sur la figure 7. L'arbre primaire 12 est alors libéré des moyens de freinage.

Si lors de la première portion de la course du basculeur 60, les billes 32 ont été mises en contact avec la seconde surface 38 de verrouillage sous l'effet du déplacement du manchon de commande 26, l'axe de commande 54 ne peut pas être rappelé élastiquement dans son sens de dégagement du synchroniseur 22. Dans ce cas, la contre-rampe 90, notamment la partie fixe 90A de celle-ci, permet de solliciter axialement le doigt de commande 66 et l'axe de commande 54 dans le sens de dégagement du synchroniseur 22, de manière à ramener le manchon de commande 26 dans sa position de libération du pignon primaire 18 de marche avant, comme cela est représenté sur la figure 8. Dans ce cas, la came 72 est ramenée en position active sous l'action du ressort 76 et le doigt de commande 66 se déplace le long de la seconde rampe 88.

On notera que sur la figure 8, le pignon baladeur 40 a été représenté dans une position qui précède immédiatement son couplage avec le pignon primaire 44 de marche arrière.

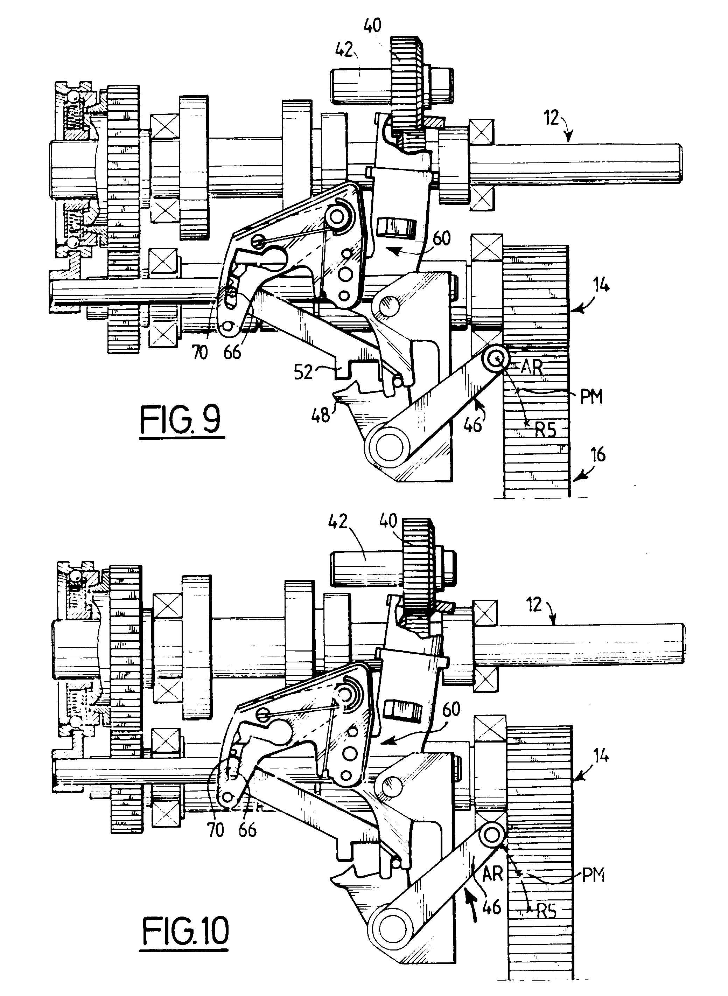

Lorsque la course d'engagement du rapport de marche arrière du basculeur 60 se poursuit, le doigt de commande 66 coopère avec le reste du second tronçon 70 du guide jusqu'à atteindre l'extrémité de ce tronçon, comme cela est représenté aux figures 9 et 10. Le pignon baladeur 40 de marche arrière engrène alors avec le pignon primaire 44 de marche arrière porté par l'arbre primaire 12 et le rapport de marche arrière est engagé.

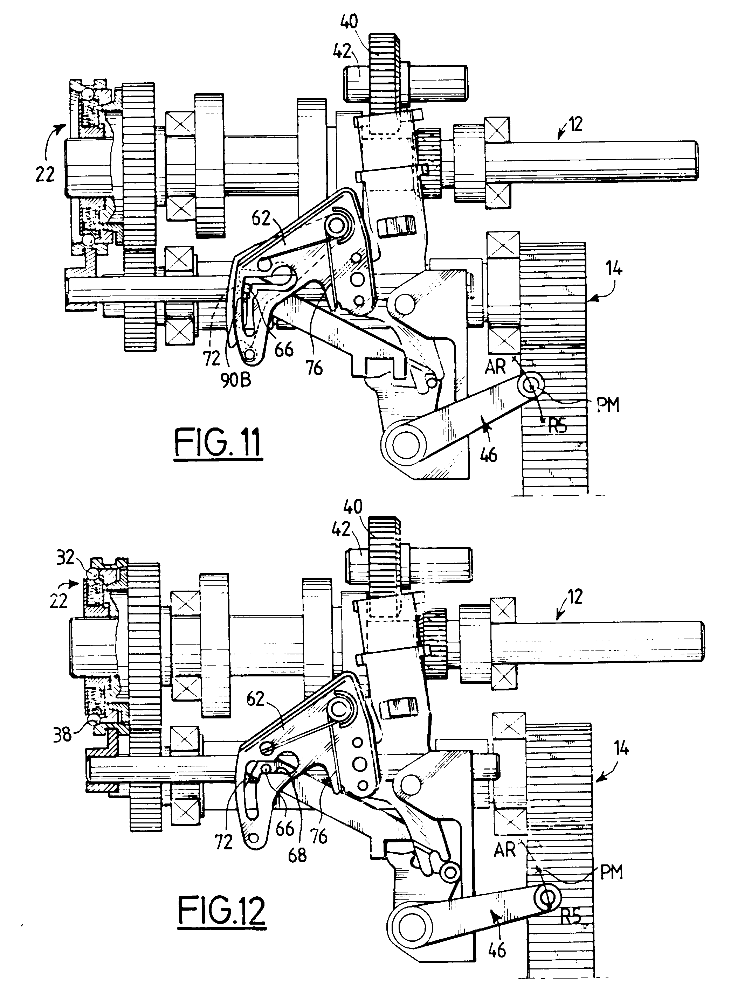

Lorsque le levier de commande 46 est ramené vers sa position de point mort, de manière à désengager la marche arrière, le doigt de commande 66 se déplace dans le second tronçon 70 du guide de manière à coopérer avec la seconde rampe 88 de la came 72 et escamoter cette dernière si bien que le synchroniseur 22 n'est pas actionné, comme cela est représenté sur la figure 11.

Puis, lorsque le doigt de commande 66 dépasse le sommet de la came 72 pour rejoindre sa position de point mort, le ressort 76 sollicite la came 72 vers sa position active, la première rampe 86 de cette came venant en appui contre le doigt de commande 66.

Afin de faciliter le retour en position active de la came 72, le doigt de commande 66 coopère avec un jeu J avec la première rampe 86, lorsque le basculeur 60 est en position de point mort telle que représentée à la figure 1.

Sur la figure 12, on a représenté le levier de commande 46 dans une position intermédiaire d'engagement ou de désengagement du cinquième rapport de marche avant. On voit sur cette figure que le premier tronçon 68 du guide permet le libre coulissement du doigt de commande 66 et de l'axe de commande 54 lors de l'engagement ou du dégagement du cinquième rapport. Sur la figure 12, le synchroniseur 22 est engagé (les billes 32 coopèrent avec la seconde surface 38 de verrouillage).

Grâce à la forme générale en L du guide 64, on permet, d'une part, le verrouillage du cinquième rapport de marche avant lorsque le rapport de marche arrière est engagé, et d'autre part, le verrouillage du rapport de marche arrière lorsque le cinquième rapport de marche avant est engagé.

On notera que, dans l'exemple décrit, l'axe Y de basculement du support 74 de came est porté par l'extrémité de liaison 62A du bras du basculeur, et que la came 72 est disposée à l'extrémité libre 62B de ce bras. Ainsi la distance entre la came 72 et l'axe Y de basculement du support 74 et la distance entre cette came 72 et l'axe X de pivotement du basculeur 60 sont relativement importantes.

Par ailleurs, la butée 78 de position active de la came 72 est portée par l'extrémité libre 62B du bras du basculeur. Ainsi, la distance entre cette butée 78 et l'axe X de pivotement du basculeur 60 est relativement importante.

Les distances définies ci-dessus, qui sont déterminées de manière à être les plus importantes possible, permettent d'utiliser une came 72 de dimensions relativement importantes et par conséquent d'obtenir un fonctionnement fiable et précis des moyens de freinage associés aux organes d'engagement du rapport de marche arrière.

Dans ce même but, l'axe X de pivotement du basculeur 60 et l'axe de commande 54 du synchroniseur 22 sont sensiblement concourants.

On notera enfin que la partie mobile 90B de la contre-rampe 90 permet de maintenir le support 74 de came en contact avec la tête de guidage 84 de la butée 78 lorsque la came 72 est escamotée.

L'invention comporte de nombreux avantages et permet notamment d'éviter l'actionnement du synchroniseur lors du dégagement du rapport de marche arrière.

## Revendications

1. Dispositif de commande d'une boîte de vitesses du type comportant des moyens de freinage des pignons de rapport de marche arrière par coopération des organes d'engagement de ce rapport avec des éléments d'actionnement d'un synchroniseur (22) associé à l'un des rapports de marche avant de la boîte de vitesses, ces moyens de freinage comprenant un basculeur pivotant (60) de commande de l'engagement du rapport de marche arrière, muni d'un bras (62) comportant un guide (64) dans lequel est reçu un doigt de commande (66) lié en translation à un axe coulissant (54) de commande du synchroniseur, le guide (64) comportant un premier tronçon (68) sensiblement rectiligne qui, en position non engagée du rapport de marche arrière, s'étend parallèlement à l'axe de commande (54), et un second tronçon (70) dont la direction générale (D) est sensiblement perpendiculaire à celle du premier tronçon (68) et qui comporte une première rampe (86) inclinée par rapport à la direction générale du second tronçon (70) de manière à provoquer un déplacement de l'axe de commande (54) dans un premier sens correspondant à l'actionnement du synchroniseur lorsque le basculeur (60) accomplit une première portion de sa course d'engagement du rapport de marche arrière, et une seconde rampe (88) inclinée en sens inverse par rapport à la première rampe (86) de manière à permettre un déplacement de l'axe de commande (54) dans l'autre sens correspondant au dégagement du synchroniseur lorsque le basculeur (60) accomplit une seconde portion de sa course d'engagement, caractérisé en ce que les deux rampes inclinées (86,88) du guide (64) sont délimitées par une came (72) escamotable lorsque le basculeur (60) accomplit une course de désengagement du rapport de marche arrière, et en ce que la came (72) est portée par un support (74) monté basculant sur le bras (62) du basculeur, sollicité élastiquement en position active de la came contre une butée (78) portée par le bras.

2. Dispositif selon la revendication 1, caractérisé en ce que le bord du guide (64) opposé à la seconde rampe (88) de la came (72) délimite une contre-rampe (90), sensiblement parallèle à cette seconde rampe, destinée à provoquer un déplacement de l'axe de commande (54) dans le sens de dégagement du synchroniseur (22).

3. Dispositif selon la revendication 1 ou 2, caractérisé en ce que le bras (62) du basculeur et le support (74) de came forment des plaques juxtaposées face contre face, le guide (64) étant délimité par des lumières superposées (80,82) ménagées dans le bras du basculeur et le support de came.

4. Dispositif selon les revendications 2 et 3 prises ensemble, caractérisé en ce que la contre-rampe (90) comporte des parties fixe (90A) et mobile (90B) délimitées respectivement par les lumières (80,82) du bras (62) et du support (74) de came.

5. Dispositif selon la revendication 3 ou 4, caractérisé en ce que les contours des lumières (80,82) ne diffèrent sensiblement que par la présence de la came (72) pour l'une et l'absence de cette came pour l'autre, et coïncident lorsque la came (72) est en position active.

6. Dispositif selon l'une quelconque des revendications 1 à 5, caractérisé en ce que la butée (78) de position active de la came (72) est délimitée par un pion cylindrique d'axe (Z) parallèle à l'axe (Y) de basculement du support (74) de came, muni d'une tête (84) de guidage de ce support (74).

7. Dispositif selon l'une quelconque des revendications 1 à 6, caractérisé en ce que l'axe (Y) de pivotement du support (74) de came est sensiblement concourant avec une normale (N) à la première rampe (86).

8. Dispositif selon l'une quelconque des revendications 1 à 7, caractérisé en ce que le bras (62) comporte une extrémité (62A) de liaison avec le reste du basculeur, qui est rapprochée de l'axe (X) de pivotement du basculeur, et une extrémité libre (62B), opposée à la précédente, qui est éloignée de l'axe (X) de pivotement du basculeur, en ce que l'axe (Y) de basculement du support (74) de came est porté par l'extrémité de liaison (62A) du bras, et en ce que la came (72) est disposée à l'extrémité libre (62B) du bras.

9. Dispositif selon la revendication 8, caractérisé en ce que la butée (78) de position active de la came (72) est portée par l'extrémité libre (62B) du bras (62) du basculeur.

10. Dispositif selon l'une quelconque des revendications précédentes, caractérisé en ce que l'axe (X) de pivotement du basculeur (60) et l'axe de commande (54) du synchroniseur (22) sont sensiblement concourants.

11. Dispositif selon l'une quelconque des revendications précédentes, caractérisé en ce qu'au point mort, le doigt de commande (66) coopère avec jeu avec la première rampe (86).

## Patentansprüche

1. Steuereinrichtung für ein Schaltgetriebe, mit einer Einrichtung zum Bremsen der Rückwärtsgang-Ritzel durch Zusammenwirken der Organe zum Einrücken dieses Gangs, mit Elementen zur Betätigung einer einem der Vorwärtsgänge des Schaltgetriebes zugeordneten Synchronisiereinrichtung (22), wobei diese Bremseinrichtung einen verschwenkbaren Kipphebel (60) zur Steuerung des Einrückens des Rückwärtsgangs aufweist, der mit einem Arm (62) mit einer Führung (64) versehen ist, in die ein Steuerfinger (66) eingreift, der bezüglich Translation mit einer verschiebbaren Achse (54) zur Steuerung der Synchronisiereinrichtung verbunden ist, wobei die Führung (64) einen ersten, im wesentlichen geradlinigen Abschnitt (68) aufweist, der sich in der nicht eingerückten Stellung des Rückwärtsgangs parallel zur Steuerachse (54) erstreckt, sowie einen zweiten Abschnitt (70), dessen allgemeine Richtung (D) zu der des ersten Abschnitts (68) im wesentlichen senkrecht ist und der eine erste Schräge (86) aufweist, die gegen die allgemeine Richtung des zweiten Abschnitts (70) so geneigt ist, daß eine Verschiebung der Steuerachse (54) in einer ersten, der Betätigung der Synchronisiereinrichtung entsprechenden Richtung bewirkt wird, wenn der Kipphebel (60) einen ersten Teil seiner Bewegung zum Einrücken des Rückwärtsgangs ausführt, sowie eine zweite Schräge (88), die entgegengesetzt zur ersten Schräge (86) geneigt ist, so daß sie eine Verschiebung der Steuerachse (54) in der anderen, dem Ausrücken der Synchronisiereinrichtung entsprechenden Richtung gestattet, wenn der Kipphebel (60) einen zweiten Teil seiner Einrückbewegung ausführt, dadurch gekennzeichnet, daß die beiden Schrägen (86, 88) der Führung (64) durch einen Nocken (72) gebildet werden, der weggerückt werden kann, wenn der Kipphebel (60) eine Bewegung zum Ausrücken des Rückwärtsgangs ausführt, und daß der Nocken (72) von einem Halter (74) getragen ist, der auf dem Arm (62) des Kipphebels schwenkbar montiert ist und elastisch in die aktive Stellung des Nokkens gegen einen vom Arm getragenen Anschlag (78) gedrückt wird.

2. Einrichtung nach Anspruch 1, dadurch gekennzeichnet, daß der der zweiten Schräge (88) des Nockens (72) entgegengesetzte Rand der Führung (64) eine Gegenschräge (90) bildet, die zur zweiten Schräge im wesentlichen parallel ist und dazu bestimmt ist, eine Verschiebung der Steuerachse (54) in der Richtung der Ausrückung der Synchronisiereinrichtung (22) zu bewirken.

3. Einrichtung nach Anspruch 1 oder 2, dadurch gekennzeichnet, daß der Arm (62) des Kipphebels und der Nockenhalter (74) Seite an Seite nebeneinandergesetzte Platten bilden, wobei die Führung (64) von einander überlagerten Langlöchern (80, 82) gebildet wird, die im Arm des Kipphebels und im Nockenhalter vorgesehen sind.

4. Einrichtung nach den Ansprüchen 2 und 3 zusammen, dadurch gekennzeichnet, daß die Gegenschräge (90) einen feststehenden Teil (90A) und einen beweglichen Teil (90B) aufweist, die durch die Langlöcher (80, 82) des Arms (62) bzw. des Nockenhalters (74) gebildet werden.

5. Einrichtung nach Anspruch 3 oder 4, dadurch gekennzeichnet, daß die Umrisse der Langlöcher (80, 82) sich im wesentlichen nur durch das Vorhandensein des Nockens (72) im einen Fall und das Fehlen dieses Nockens im andern Fall unterscheiden und zusammenfallen, wenn der Nocken (72) in aktiver Stellung ist.

6. Einrichtung nach einem der Ansprüche 1 bis 5, dadurch gekennzeichnet, daß der Anschlag (78) für die aktive Stellung des Nockens (72) durch einen zylindrischen Bolzen mit einer zur Schwenkachse (Y) des Nockenhalters (74) parallelen Achse (Z) gebildet wird, der mit einem Kopf (84) zur Führung dieses Halters (74) versehen ist.

7. Einrichtung nach einem der Ansprüche 1 bis 6, dadurch gekennzeichnet, daß die Schwenkachse (Y) des Nockenhalters (74) eine Normale (N) auf die erste Schräge (86) im wesentlichen schneidet.

8. Einrichtung nach einem der Ansprüche 1 bis 7, dadurch gekennzeichnet, daß der Arm (62) ein Ende (62A) zur Verbindung mit dem Rest des Kipphebels besitzt, das der Schwenkachse (X) des Kipphebels nahe ist, sowie ein diesem Ende entgegengesetztes freies Ende (62B), das von der Schwenkachse (X) des Kipphebels entfernt ist, daß die Schwenkachse (Y) des Nockenhalters (74) vom Verbindungsende (62A) des Arms getragen wird, und daß der Nocken (72) am freien Ende (62B) des Arms angeordnet ist.

9. Einrichtung nach Anspruch 8, dadurch gekennzeichnet, daß der Anschlag (78) für die aktive Stellung des Nockens (72) vom freien Ende (62B) des Arms (62) des Kipphebels getragen wird.

10. Einrichtung nach einem der vorhergehenden Ansprüche, dadurch gekennzeichnet, daß die Schwenkachse (X) des Kipphebels (60) und die Achse (54) zur Steuerung der Synchronisiereinrichtung (22) sich im wesentlichen schneiden.

11. Einrichtung nach einem der vorhergehenden Ansprüche, dadurch gekennzeichnet, daß der Steuerfinger (66) am Totpunkt mit der ersten Schräge (86) mit einem Spiel zusammenwirkt.

## Claims

1. Device for controlling a gearbox of the type comprising means for braking the reverse-gear pinions by the interaction of the members for engaging this ratio with actuating elements of a synchromesh (22) associated with one of the forward-gears in the gearbox, these braking means comprising a pivoting rocker (60) for controlling the engagement of reverse gear, equipped with an arm (62) comprising a guide (64) in which there is received a control finger (66) connected in terms of translation to a sliding shaft (54) controlling the synchromesh, the guide (64) comprising a first approximately straight portion (68) which, in the position in which reverse gear is not engaged, extends parallel to the control shaft (54), and a second portion (70), the overall direction (D) of which is approximately perpendicular to that of the first portion (68) and which comprises a first ramp (86) which is inclined with respect to the overall direction of the second portion (70) so as to cause the control shaft (54) to move in a first direction corresponding to the actuation of the synchromesh when the rocker (60) finishes a first portion of its travel for engaging reverse gear, and a second ramp (88) which is inclined in the opposite direction to the first ramp (86), so as to allow the control shaft (54) to move in the other direction corresponding to the disengagement of the synchromesh when the rocker (60) finishes a second portion of its engagement travel, characterized in that the two inclined ramps (86, 88) of the guide (64) are delimited by a cam (72) that can be retracted when the rocker (60) completes a travel for disengaging reverse gear, and in that the cam (72) is borne by a support (74) mounted so that it can rock on the arm (62) of the rocker, urged elastically, when the cam is in the active position, against a stop (78) borne by the arm.

2. Device according to Claim 1, characterized in that the edge of the guide (64) opposite the second ramp (88) of the cam (72) delimits a counter-ramp (90) approximately parallel to this second ramp, intended to cause the control shaft (54) to move in the direction for disengaging the synchromesh (22).

3. Device according to Claim 1 or 2, characterized in that the arm (62) of the rocker and the cam support (74) form plates which are juxtaposed face against face, the guide (64) being delimited by superimposed slots (80, 82) formed in the arm of the rocker and the cam support.

4. Device according to Claims 2 and 3 taken together, characterized in that the counter-ramp (90) comprises a fixed part (90A) and a moving part (90B), which parts are delimited by slots (80, 82) in the arm (62) and in the cam support (74), respectively.

5. Device according to Claim 3 or 4, characterized in that the contours of the slots (80, 82) differ essentially only in the presence of the cam (72) in the case of one of them, and the absence of this cam in the case of the other, and coincide when the cam (72) is in the active position.

6. Device according to any one of Claims 1 to 5, characterized in that the stop (78) for the active position of the cam (72) is delimited by a cylindrical peg of axis (Z) parallel to the axis (Y) of rocking of the cam support (74), with a head (84) for guiding this support (74).

7. Device according to any one of Claims 1 to 6, characterized in that the axis (Y) of pivoting of the cam support (74) is essentially concurrent with a normal (N) to the first ramp (86).

8. Device according to any one of Claims 1 to 7, characterized in that the arm (62) comprises an end (62A) for connecting with the rest of the rocker, which end is close to the axis (X) of pivoting of the rocker, and a free end (62B), at the opposite end to the previous end, which is remote from the axis (X) of pivoting of the rocker, and in that the axis (Y) of rocking of the cam support (74) is borne by the connecting end (62A) of the arm, and in that the cam (72) is placed at the free end (62B) of the arm.

9. Device according to Claim 8, characterized in that the stop (78) for the active position of the cam (72) is borne by the free end (62B) of the arm (62) of the rocker.

10. Device according to any one of the preceding claims, characterized in that the axis (X) of pivoting of the rocker (60) and the control shaft (54) of the synchromesh (22) are essentially concurrent.

11. Device according to any one of the preceding claims, characterized in that in neutral, the control finger (66) interacts with play with the first ramp (86).
